# EUROPEAN PATENT APPLICATION

(11) **EP 4 068 066 A1**
(43) Date of publication of application: **05.10.2022**
(21) Application number: 21199921.4
(22) Date of filing: 29.09.2021
(51) Int. Cl.: G06F 3/04817, G06F 3/14, G06F 9/4401, H04M 1/02

(54) **INFORMATION PROCESSING METHOD AND DEVICE, MOBILE DEVICE AND STORAGE MEDIUM**

(30) Priority: 29.03.2021 CN 202110335400
(71) Applicant: Beijing Xiaomi Mobile Software Co., Ltd., Beijing 100085 (CN)
(72) Inventor: LIU, Lijun, Beijing (CN); LIANG, Yingying, Beijing (CN); LU, Chunyi, Beijing (CN)
(74) Representative: Hughes, Andrea Michelle

(57) **Abstract**

Provided is an information processing method and device, mobile device and storage medium. The information processing method includes: detecting a current posture of a first screen; controlling the mobile device to run one of a first operating system and a second operating system according to the current posture of the foldable first screen, and the second operation system is different from the first operating system.

## Description

### TECHNICAL FIELD

The present disclosure relates to the field of electronic technology, and in particular to an information processing method and device, mobile device, and storage medium.

### BACKGROUND

With the development of electronic technology, there are more and more types of mobile devices. Typical mobile devices include: mobile phones, tablet computers, wearable devices, a two-in-one device that combines a laptop/personal computer (PC) with a tablet, and a two-in-one device that combines a mobile phone with a tablet.

In view of portability of a device and superior display visual effects and touch effects provided by a large screen, the folding screen comes into being. When the folding screen is folded, the thickness of the mobile device is increased, and the length or width is reduced, so that the mobile device is easy to carry, that is, the portability is improved. On the other hand, when the folding screen is deployed, a large-screen display and/or large-screen touch can be provided.

### SUMMARY

The present disclosure provides an information processing method and device, a mobile device and a storage medium.

A first aspect of the present disclosure provides an information processing method, applied to a mobile device including a foldable first screen. The method includes: detecting a current posture of the foldable first screen; and controlling, according to the current posture of the foldable first screen, the mobile device to run a first operating system or a second operating system, and the second operating system is different from the first operating system.

A second aspect of the present disclosure provides an information processing device, applied to a mobile device including a foldable first screen. The information processing device includes: a detection module, configured to detect a current posture of the foldable first screen; and a control module, configured to control, according to the current posture of the foldable first screen, the mobile device to run a first operating system or a second operating system, and the second operating system is different from the first operating system.

A third aspect of the present disclosure provides a mobile device, including: a memory for storing processor executable instructions; and a processor connected to the memory. The processor is configured to execute the information processing method provided above.

A fourth aspect of the present disclosure provides a non-transitory computer-readable storage medium, instructions in the storage medium, when executed by a processor of a computer, cause the computer to execute the information processing method provided above.

The technical solutions provided by the embodiments of the present disclosure may at least have the following beneficial effects.

In order to improve the performance of a mobile device having a foldable screen (that is, the first screen), in the embodiments of the present disclosure, the mobile device can run at least the first operating system and the second operating system. Thus, according to the posture of the first screen that reflects the current use requirements, the mobile device is controlled to run the first operating system or the second operating system that can meet the current use requirements, thereby improving the use performance of the mobile device and user's satisfaction. Further, in the embodiment of the present disclosure, the mobile device will automatically control the mobile device to run the first operating system or the second operating system according to the status information of the first screen, so as to realize the adaptive processing of operating system switching. The performance of mobile devices and user's satisfaction is further adjusted.

### BRIEF DESCRIPTION OF THE DRAWINGS

The drawings herein are incorporated into the specification and constitute a part of the specification, show embodiments consistent with the disclosure, and are used to explain the principles of the disclosure together with the specification.
FIG. 1 is a schematic flowchart of an information processing method according to an exemplary embodiment;
FIG. 2A is a schematic diagram illustrating that a first screen is folded to change from the deployed posture to the folded posture according to an exemplary embodiment;
FIG. 2B is a schematic diagram illustrating different folding states of the foldable first screen according to an exemplary embodiment;
FIG. 2C is a schematic diagram illustrating a system interface of a PC operating system according to an exemplary embodiment;
FIG. 2D is a schematic diagram illustrating a system interface of a mobile phone operating system according to an exemplary embodiment;
FIG. 3 is a schematic flowchart of an information processing method according to an exemplary embodiment;
FIG. 4A is a schematic diagram illustrating an effect of a swiping operation, detected while the foldable first screen is in a deployed posture, for controlling an operating system running on a mobile device according to an exemplary embodiment;
FIG. 4B is a schematic diagram illustrating an effect of a swiping operation, detected while the foldable first screen is in a deployed posture, for controlling an operating system running on a mobile device according to an exemplary embodiment;
FIG. 5 is a schematic structural diagram illustrating a mobile device according to an exemplary embodiment;
FIG. 6 is a schematic flowchart of an information processing method according to an exemplary embodiment;
FIG. 7A is a schematic diagram showing an effect where there exists an icon vacancy on the desktop according to an exemplary embodiment;
FIG. 7B is a schematic diagram showing an effect where there exists an icon vacancy on the desktop according to an exemplary embodiment;
FIG. 7C is a schematic diagram showing an effect where there exists an icon vacancy on the desktop according to an exemplary embodiment;
FIG. 8 is a schematic structural diagram illustrating an information processing device according to an exemplary embodiment;
FIG. 9 is a schematic structural diagram illustrating a mobile device according to an exemplary embodiment.

### DETAILED DESCRIPTION

The exemplary embodiments will be described in detail here, and examples of the embodiments are shown in the accompanying drawings. When the following description refers to the drawings, unless otherwise indicated, the same signs in different drawings indicate same or similar elements. The implementation manners described in the following exemplary embodiments do not represent all implementation manners consistent with the present disclosure. On the contrary, they are merely examples of devices and methods consistent with some aspects of the present disclosure as recited in the appended claims.

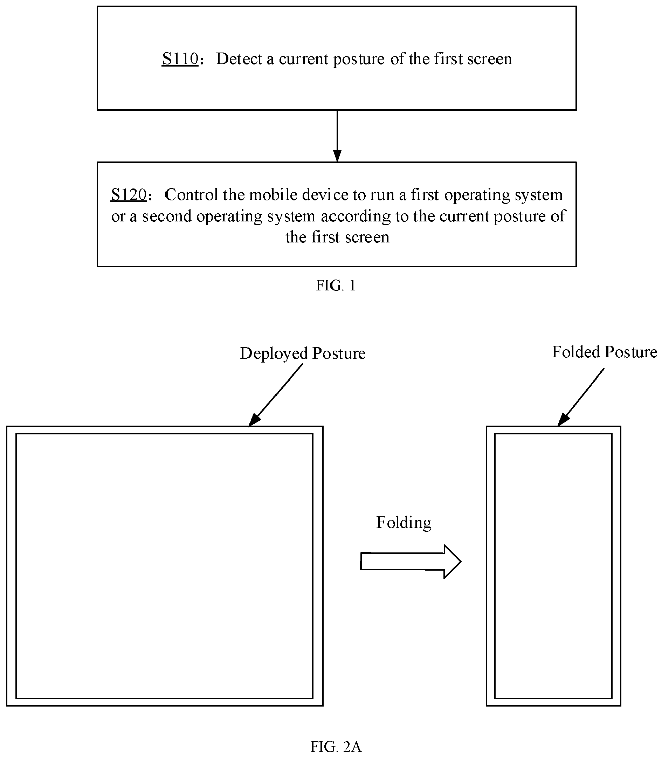

As shown in FIG. 1, embodiments of the present disclosure provide an information processing method, which is applied to a mobile device including a foldable first screen. The method includes steps described below.

In S 110, a current posture of the foldable first screen is detected.

In S120, the mobile device is controlled to run a first operating system or a second operating system according to the current posture of the foldable first screen, and the second operating system is different from the first operating system.

The method can be applied to various mobile devices.

In the embodiments of the present disclosure, the mobile device includes, but is not limited to, a terminal device with at least one foldable screen, and a typical mobile terminal with a foldable screen may include a foldable mobile phone.

In some embodiments, the mobile device is a foldable flexible device or a non-flexible device having a folding function. In the embodiment of the present disclosure, the foldable first screen may be a foldable screen. Exemplarily, the foldable first screen is a flexible screen or a foldable screen including two hard screen areas connected by a rotating shaft.

For example, if the foldable first screen is a flexible screen with a larger area, the flexible screen enables the mobile device to switch between the folded posture and the deployed posture. In a mobile device with a flexible screen, a rotary shaft module can further be provided to assist the bending of the flexible screen, and support the flexible screen after the flexible screen is bent.

In some embodiments, whether the foldable first screen is folded or not as well as a folding degree thereof reflect current different user requirements.

Therefore, in the embodiment of the present disclosure, the operating system running on the mobile device is determined according to the current posture of the foldable first screen.

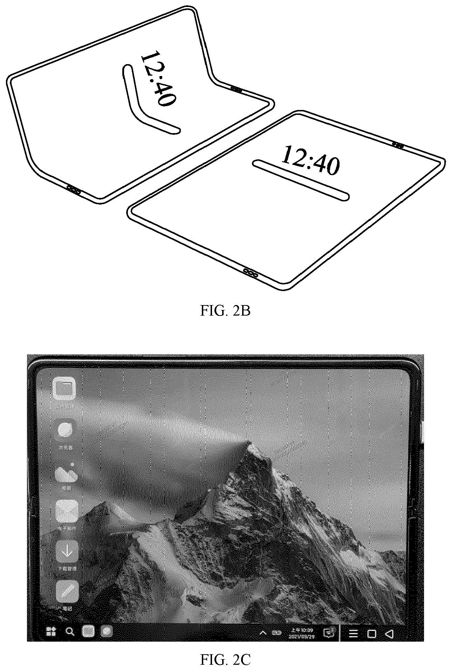

As shown in FIG. 2A, the foldable first screen can be folded to be switched from the deployed posture to the folded posture. FIG. 2B is a schematic diagram where the foldable first screen starts to be gradually folded after being completely expanded.

The first operating system and the second operating system are different operating systems. For example, the difference between the first operating system and the second operating system may lie in any of the following aspects:
system kernels of the first operating system and the second operating system are different;
average consumed resources of the first operating system and the second operating system are different;
system interfaces of the first operating system and the second operating system are different, some system interfaces are suitable for devices with landscape screen, and some system interfaces are suitable for devices with portrait screen. A typical device with more portrait screen usage scenarios is a mobile phone; a typical device with more landscape screen usage scenarios may include a tablet computer and/or a PC.

For example, the first operating system may be a PC operating system that supports multi-tasking and multi-window, and the second operating system may be a mobile phone operating system that does not support multi-tasking and multi-window.

In another embodiment, the first operating system may be a mobile phone operating system supporting multi-tasking and multi-window, and the second operating system may be a mobile phone operating system that does not support multi-tasking and multi-window. Among them, the mobile phone operating system supporting multi-tasking and multi-window has a display mode similar to the display mode of the PC operating system supporting multi-tasking and multi-window, and is adapted to the needs of the mobile phone.

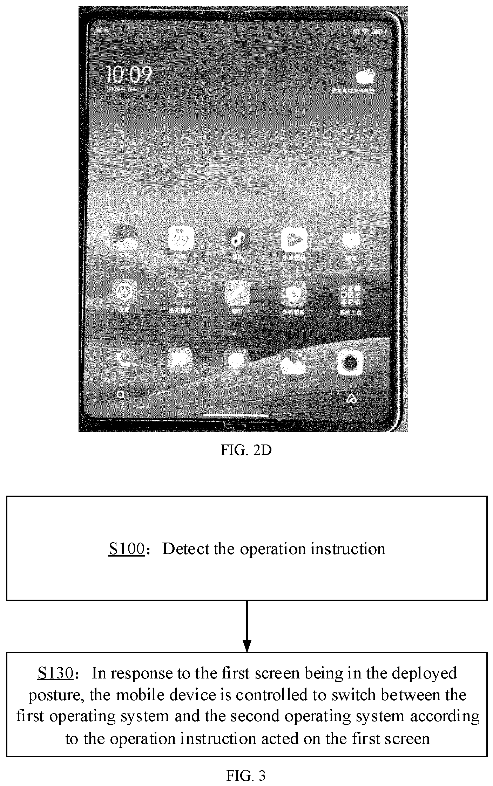

In some embodiments, a task bar and/or a menu bar are generally displayed directly on the desktop of the system interface of the PC operating system, as shown in FIG.2C. On the contrary, the task bar and/or the menu bar are generally not displayed directly on the desktop of the system interface of the mobile phone operating system, as shown in FIG. 2D.

As shown in FIG. 2C, various icons on the system interface of the PC operating system are generally arranged from left to right. Therefore, blank positions without icons are generally on the right side of the screen.

On the contrary, various icons on the system interface of the mobile phone operating system are generally arranged from bottom to top, as shown in FIG. 2D. Therefore, blank positions without icons are generally on the top of the screen.

In the first aspect, in the embodiments of the present disclosure, the mobile device can run at least the first operating system and the second operating system. Thus, the mobile device can be controlled according to use requirements so as to run the first operating system or the second operating system that meets the current use requirements. In this way, the use performance of mobile device and user satisfaction are improved.

In a second aspect, in the embodiments of the present disclosure, the mobile device can run merely one operating system at a certain time, which reduces resource preemption by running dual operating systems and ensures a smooth running of a single operating system of the current mobile device.

In a third aspect, operating mechanisms and/or operating interfaces provided by different operating systems are different. The status information of the foldable first screen reflects the current requirements of the user. To this end, the mobile device is controlled to operate the first operating system or the second operating system according to the status information of the foldable first screen. In this way, the mobile device is enabled to adaptively provide an operating system that meets current requirements, which improves the intelligent performance of the terminal device or the user satisfaction.

In an embodiment, the mobile device is provided with various sensors that can detect whether the foldable first screen of the mobile device is switched between the folded posture and the deployed posture. These sensors may be sensors dedicated to detecting the current posture of the foldable first screen.

In another embodiment, the foldable first screen is a touch screen, and a capacitor array for detecting touch is distributed on the touch screen. When the foldable first screen is bent and deployed, it will cause a change of the mutual coupling between the capacitors in the capacitor array. Therefore, the capacitance value generated by the mutual coupling between adjacent capacitors in the capacitor array in the touch screen can be used to detect whether the foldable first screen is switched between the folded posture and the deployed posture.

In an embodiment, the step S110 may include the following step:
in response to detecting that a folding angle between two foldable parts of the foldable first screen has a preset change within a preset period, determining that the foldable first screen is switched between the folded posture and the deployed posture; otherwise, it can be considered that the mobile device does not switch between the folded posture and the deployed posture.

A determination result here is the posture switching information.

In the embodiment of the present disclosure, the posture switching information is any information indicating that the foldable first screen is switched between the folded posture and the deployed posture.

In an embodiment, the preset period may be any preset time value, for example, 1 second, 0.5 second, or 2 seconds and the like.

In another embodiment, the preset period may be determined according to a statistical period used for successfully switching the mobile device between the two postures. For example, it generally takes period A for switching the mobile device from the folded posture to the deployed posture or from the deployed posture to the folded posture, then the preset period can be A or B*A, where B is a positive number less than 1. The B can be 0.2, 0.1, 0.5, 0.05, 0.03, 0.02, or the like. The angle value corresponding to the preset change may be: B*180 degrees or B*360 degrees. 180 degrees can refer to the maximum angle for the mobile device to switch from a fully folded posture to a fully deployed posture.

It can be understood that the folding posture includes: a fully folded posture and a half-folded posture. The deployed posture may include: a fully deployed posture and a half deployed posture. The fully folded posture means that the angle between the two foldable parts of the foldable first screen is 0 degree. The fully deployed posture means that the angle between the two foldable parts of the foldable first screen is 180 degrees. The half deployed posture may mean that the angle between the two foldable parts of the foldable first screen is in a range from 180 degrees to a first angle, where the first angle is greater than 90 degrees. For example, the first angle may be an angle such as 160 degrees, 155 degrees, 145 degrees, or 150 degrees. The half-folded posture may mean that the angle between the two foldable parts of the foldable first screen is in a range from 90 degrees to a second angle, where the second angle is less than 90 degrees. For example, the second angle may be 30 degrees, 20 degrees, or 30 degrees.

The fully deployed posture may mean that the foldable first screen is in a horizontal plane, at this time all display areas of the foldable first screen are on the same plane.

As an example, if the folding angle is 90 degrees, the foldable first screen can be considered to be in a critical state between the folded posture and the deployed posture. According to specific needs, the posture with the folded angle of 90 degrees can be divided as the folded posture or the deployed posture.

In an embodiment, the foldable first screen may be adjusted between the folded posture and the deployed posture as follows: the foldable first screen is subjected to at least the half-deployed posture to be switched to the half-folded posture or the fully folded posture; and/or, the foldable first screen is subjected to at least the half-folded posture to be switched to the half-deployed posture or the fully-deployed posture.

That is to say, it can be understood that the switching of the foldable first screen between the fully deployed posture and the half deployed posture, or the switching of the foldable first screen between two half deployed postures corresponding to different folding angles, cannot be regarded as the switching of the foldable first screen between the folded posture and the deployed posture mentioned in the embodiment of the present disclosure.

Similarly, the switching of the foldable first screen between the fully folded posture and the half-folded posture, or the switching of the foldable first screen between two half-folded postures corresponding to different folding angles, cannot be regarded as the switching of the foldable first screen between the folded posture and the deployed posture mentioned in the embodiment of the present disclosure. In this way, unnecessary state switching of the target function modules caused in the following situation can be reduced: when the user's unconsciously folds the foldable first screen, rather than actually requiring switching the posture of the foldable first screen. Therefore, the switching accuracy of the target function modules may be improved. As an example, at least the unnecessary switching in the following situation can be reduced: when the user only adjusts the deployed angle in the deployed posture or the folding angle in the folded posture, and there is no need to switch the state of the target function modules.

In an embodiment, when the foldable first screen is in a fully deployed posture, the exposed outer surface of the foldable first screen is the largest. When the foldable first screen is in a fully folded posture, it can be considered that part of at least one surface of the foldable first screen is hidden. It can be understood that, if the foldable first screen has a folding posture, when the foldable first screen is in the folded posture, it can be considered that the foldable first screen is in a state where the exposed outer surface is the smallest.

If the foldable first screen is currently in the deployed posture, the operating system running on the mobile device is further determined according to detection state information of an operating system switching instruction of the foldable first screen.

In some embodiments, the step S120 may include:
in response to the foldable first screen being in the deployed posture, controlling the mobile device to run the first operating system; and/or
in response to the foldable first screen being in the folded posture, controlling the mobile device to run the second operating system.

Since the first operating system is an operating system indicating multi-tasking and multi-windows, it can be adapted to the large display area provided by the foldable first screen in the deployed posture. At this time, the mobile device is controlled to run the first operating system, so that the user can interact with the first operating system on the foldable first screen in the deployed posture.

For example, the mobile device may be a two-in-one device combined with a tablet and a mobile phone. Assuming that the first operating system is a PC operating system, when the foldable first screen of the mobile device is in the deployed posture, the mobile device will be used as a PC. In this way, a PC operating system that is more suitable for the current use state is used, so that the user can easily perform touching and/or mouse operations and the like, and the use performance of mobile devices and user satisfaction are improved.

When the foldable first screen is in the folded posture, the area of the foldable first screen that the user can operate is small. In this case, on the one hand, there is no need to run a PC operating system that occupies more system resources, and only need to run a second operating system (such as the mobile phone operating system) suitable for the current display area. In the case that the foldable first screen is folded and the mobile device is used as a small screen device such as a mobile phone, more system resources are reserved to ensure the system response rate while meeting of the requirements of the mobile phone.

As shown in FIG. 3, an embodiment of the present disclosure provides an information processing method, which may include steps described below.

In S130, in response to the foldable first screen being in the deployed posture, the mobile device is controlled to switch between the first operating system and the second operating system according to an operation instruction acted on the foldable first screen.

The step S130 here is used in conjunction with step S120. However, steps S130, S120 can also be used separately. That is, when the foldable first screen is in the deployed posture, the mobile device is allowed to be controlled to switch between the first operating system and the second operating system based on the detected instruction.

As shown in FIG. 3, the method further includes step S100. In S100, the operation instruction is detected.

When the foldable first screen is in the deployed posture, an operation interface for selecting an operating system is provided to the user. In some embodiments, the operation interface may be a displayed virtual control or a specific physical control provided by the mobile device. In other embodiments, the operation interface may correspond to a certain operation of the user, for example, a touch operation acted on the foldable first screen as a touch screen.

To sum up, in the embodiment of the present disclosure, if the foldable first screen is in the deployed posture, the mobile device can also be controlled to switch between the first operating system and the second operating system according to the operating instruction acted on the foldable first screen.

As an example, in some embodiments, when the foldable first screen is in the deployed posture, the operating system running on the mobile device is the first operating system by default. However, in some cases, for example, the user wants to use the second operating system, e.g., entering the second operating to search a specific file etc. At this time, the user can input an operation instruction that acts on the foldable first screen, and the mobile device will switch the currently running operating system.

In an embodiment, the operation instruction may be a switching instruction used to instruct the mobile device to switch the operating system. In view of this, exemplarily, the step, that in response to the foldable first screen being in the deployed posture, the mobile device is controlled to operate between the first operating system and the second operating system according to the operation instruction acted on the foldable first screen, includes the following step:

in response to the foldable first screen being in the deployed posture and the mobile device currently running the first operating system, controlling the mobile device to be switched to the second operating system when a switching instruction acted on the foldable first screen is detected; and/or
in response to the foldable first screen being in the deployed posture and the mobile device currently running the second operating system, controlling the mobile device to be switched to the first operating system when a switching instruction acted on the foldable first screen is detected.

In some embodiments, the operation instruction may be an indication instruction for instructing the mobile device to access a corresponding operating system. In view of this, if the detected operation instruction is a first instruction used for instructing to enter the first operating system, when the foldable first screen is in the deployed posture, the mobile device is controlled to run the first operating system according to the first instruction. If the detected operation instruction is a second instruction used for instructing to access the second operating system, when the foldable first screen is in the deployed posture, the mobile device is controlled to run the second operating system according to the second instruction.

As an example, the S130 may include:
in response to determining, according to the operation instruction, a swiping operation a swiping direction of which is in the first direction, controlling the mobile device to run the second operating system; and/or,
in response to determining, according to the operation instruction, a swiping operation a swiping direction of which is in the second direction, controlling the mobile device to run the first operating system;
where the second direction is the opposite direction of the first direction.

If the foldable first screen is a touch screen supporting multi-touch, the swiping operation may be a multi-finger swiping. For example, the multi-finger swiping may be a two-finger swiping, a three-finger swiping or a four-finger swiping, to reduce the distinction from the single-finger swiping that is most frequently used, so that the terminal device can easily determine that the currently detected swiping operation is an operation instruction for controlling the mobile device to switch the operating system.

In some embodiments, the first direction and the second direction may be linear directions. For example, the swiping operations in the first direction and the second direction respectively correspond to swiping left and swiping right; or swiping up and swiping down.

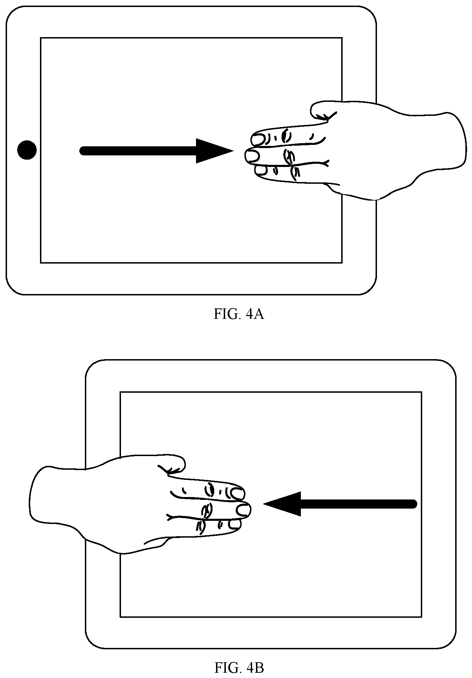

As shown in FIGs. 4A and 4B, the swiping in the first direction and the swiping in the second direction correspond to a three-finger swiping left and a three-finger swiping right, respectively.

In other embodiments, the first direction and the second direction may be a clockwise direction or a counter clockwise direction respectively. Exemplarily, if the first direction is a clockwise direction, the second direction is a counter clockwise direction; if the first direction is a counter clockwise direction, the second direction is a clockwise direction.

In some embodiments, the foldable first screen is in the folded posture, and the function of triggering operation switching of the mobile device by the operation instruction is disabled. The operation instruction at this time may be the aforementioned switching instruction and/or indication instruction.

In some embodiments, the method further includes:
in response to the mobile device running the first operating system and the foldable first screen being in the deployed posture, displaying a system interface of the first operating system on the entire first screen; or,
in response to the mobile device running the second operating system and the foldable first screen being in the folded posture, displaying a system interface of the second operating system on a part of screen area of the foldable first screen, where the part of screen area of the foldable first screen is located on the outer surface of the mobile device after the foldable first screen is folded.

Assuming that the mobile device includes merely one screen, that is, the foldable first screen, description is made by taking a situation where the foldable first screen is folded once as an example.

If the foldable first screen is in the deployed posture, that is, two half-screen areas of the foldable first screen are within the same screen or the angle between two half-screen areas is large, then the user can see the entire first screen without flipping the mobile device or moving his/her own position. At this time, the first operating system is running, and the system interface of the first operating system is displayed on the entire first screen. In this case, it is equivalent to that the entire first screen is in a working state.

If the foldable first screen is in the folded posture, the foldable first screen is folded into two half-screen areas, and the two half-screen areas are not located in the same plane. Usually, in order to save power at this time, only one half-screen area is illuminated, and the other half-screen area is extinguished. Further, the illuminated half-screen area is the screen area exposed on the outer surface of the mobile device.

In the embodiment of the present disclosure, in this case, the mobile device is configure to run the second operating system, and display the system interface of the second operating system on the illuminated half screen.

In some embodiments, the foldable first screen is a flexible screen, and the flexible screen can be folded multiple times, for example, being folded multiple times such as two times or three times. When the foldable first screen is folded multiple times, some screen area of the foldable first screen will obviously not be exposed on the outer surface of the mobile device. In the embodiment of the present disclosure, the illuminated screen area of the foldable first screen is necessary to be exposed on the outer surface of the mobile device, and is used to display at least the system interface of the second operating system.

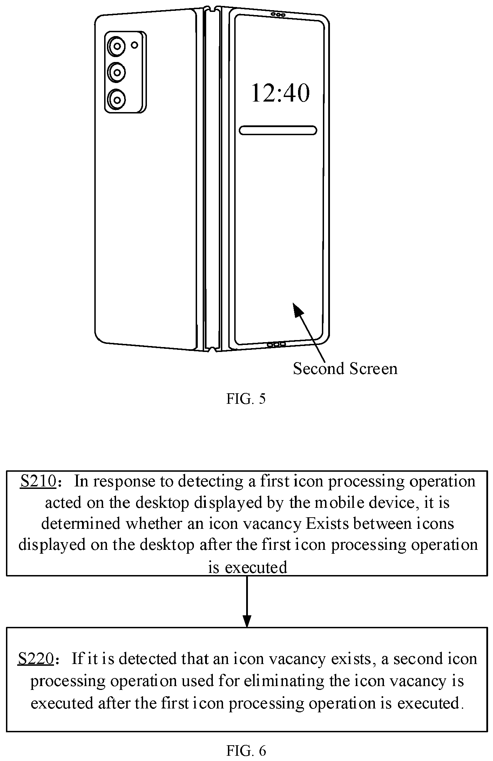

In some cases, the mobile device further includes a second screen. The second screen is located on the opposite side of the foldable first screen, and the projection of the second screen on the foldable first screen is located within the left half screen area or in the right half screen area of the firs screen. Referring to FIG. 5, the second screen is a screen whose area is less than or equal to the area of the half-screen of the foldable first screen when the foldable first screen is fully deployed. The foldable first screen of the mobile device shown in FIG. 5 can refer to FIG. 2B.

The method further includes:
in response to the mobile device running the first operating system and the foldable first screen being in the deployed posture, displaying a system interface of the first operating system on the entire first screen; or,
in response to the mobile device running the second operating system and the foldable first screen being in the folded posture, displaying a system interface of the second operating system on the second screen.

If the mobile device includes two screens, and the second screen is arranged on the opposite side of the foldable first screen, when the foldable first screen is in the folded posture, the entire display area of the foldable first screen may be hidden and the second screen is exposed on the outer surface of the mobile device.

The second screen herein can be a flexible screen or a hard screen.

When the foldable first screen is in the folded posture and the second operating system is running, the system interface of the second operating system is displayed on the second screen. Further, at this time, the foldable first screen may enter the extinguished state to save the power consumption of the mobile device.

When the foldable first screen is in the deployed posture and the first operating system is running, the system interface of the first operating system is displayed on the foldable first screen. Further, at this time, the second screen may enter the extinguished state to save the power consumption of the mobile device.

The embodiments of the present disclosure provide an information processing method, which can be applied to a terminal device including a first foldable screen, and can also be applied to a mobile device that only includes a screen that cannot be folded. This method can be implemented alone or in combination with any of the aforementioned information processing methods.

As shown in FIG. 6, an embodiment of the present disclosure provides an information processing method, which may include steps described below.

In S210, in response to detecting a first icon processing operation acted on the desktop displayed by the mobile device, it is determined whether an icon vacancy exists between icons displayed on the desktop after the first icon processing operation is executed

In S220, in response to detecting that an icon vacancy exists, a second icon processing operation used for eliminating the icon vacancy is executed after the first icon processing operation is executed.

The first icon processing operation herein may be any processing operation that can change the distribution of icons displayed on the desktop. The first icon processing operation may be a user operation, or may be an icon processing operation included in a procedure when the mobile device executes a certain function. For example, the user moves an application icon on the desktop from position A to position B. After the application icon at position A is removed, an icon vacancy exists. As another example, an application is uninstalled on a mobile device, the icon of the application will also be deleted from the desktop, resulting in an icon vacancy.

For example, the first icon processing operation includes but is not limited to at least one of the following:
an icon drag operation;
an icon deletion operation;
an icon hiding operation; and
an operation of adding an icon to an icon folder.

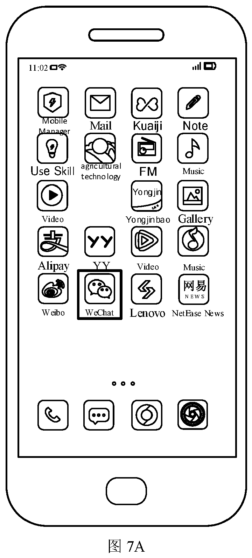

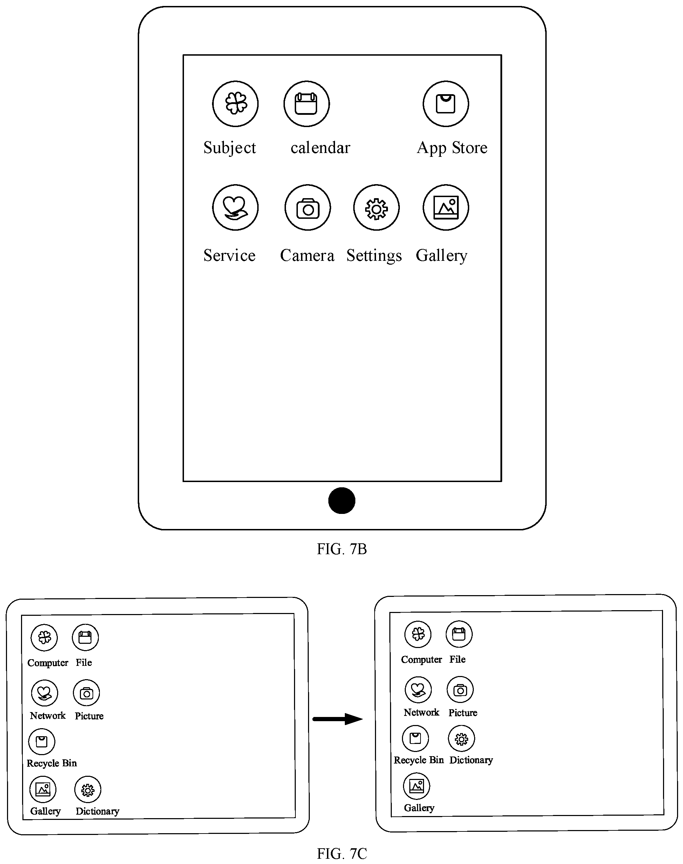

There are icon vacancies on each desktop shown in FIG. 7A and FIG. 7B. For example, as shown in FIG. 7A, as viewed from the front of the mobile device shown in FIG. 7A, an icon vacancy exists on a position located at the third row from top to bottom and the second column from left to right. As shown in FIG. 7B, as viewed from the front of the mobile device shown in FIG. 7B, an icon vacancy exists on a position located at the first row from top to bottom and the third column from left to right. If the icon vacancy is maintained, the layout of the icons on the desktop is apparently not neat and the user's visual viewing effect is negatively affected.

The icon displayed on the desktop can be any icon, such as an icon of an application and/or an icon of a file and/or an icon of a folder.

After detecting the first icon processing operation, the mobile device determines whether there appears an icon vacancy between two adjacent icons on the desktop displayed by the mobile device in response to the first icon processing operation. In the embodiment of the present disclosure, the second icon processing operation is performed if an icon vacancy exists.

In some embodiments, the second icon processing operation is performed automatically, or may be triggered by the user, for example, being triggered while detecting an input operation used for instructing to perform the second icon processing.

In the embodiment of the present disclosure, the second icon operation may be any icon vacancy elimination operation capable of eliminating the icon vacancy.

The left side in FIG. 7C shows a desktop with icon vacancies, and the right side in FIG. 7C shows a desktop with the icon vacancies being filled.

The second icon operation may include at least one of the following:
an icon rearrangement operation, through which the icon vacancy between icons can be eliminated;
an icon replenish operation, through which an icon is replenished at the icon vacancy, and the icon can be a file icon, application icon, folder icon, or a preset icon dedicated to fill in the icon vacancy and not link to the application, file, and/or folder.

In particular, such preset icon may be a dedicated replenish position design icon, or may be an identification icon of the device manufacturer of the mobile device, or an application icon of an application program that has not been installed in the mobile device. If the preset icon is an application icon of an application program that has not been installed in the mobile device, when a preset operation such as a long press or double-click on the application icon is detected, the mobile device will download and install the application corresponding to the application icon.

In some embodiments, the application icon may refer to an application program recommended by the application store to be downloaded and installed on the mobile device.

It is worth noting that in order to be distinguished from the file icons displayed on the desktop, the application icons and/or file icons of the installed applications in the mobile device, the brightness of such preset icon can be lower than the brightness of other icons, and/or, the contrast of the preset icon can be lower than the contrast of other icons.

Therefore, in some embodiments, the step, that in response to detecting that an icon vacancy exists, a second icon processing operation used for eliminating the icon vacancy is executed after the first icon processing operation is executed, includes at least one of the following:
in response to detecting that the icon vacancy exists, the icons displayed on the desktop are rearranged after the first icon processing operation is executed, and the icon vacancy between adjacent icons disappears after the icons on the desktop are rearranged;
in response to detecting that the icon vacancy exists, a preset icon is replenished at the icon vacancy after the first icon processing operation is executed.

When the second icon processing operation is a rearrangement operation, the icons are rearranged based on different rearrangement strategies during the rearrangement.

For example, assuming that the rearrangement strategy is a strategy with minimum icon movement, the last icon on the last page of the desktop can be moved to the icon vacancy. In this way, if there are N icon vacancies, only N icons are moved.

Assuming that the rearrangement strategy is a strategy with minimum icon movement on the current page, when the desktop has multiple icon pages, icons in the last row or the first row on the page with icon vacancies are shifted to the icon vacancies, so that the icon vacancies are changed from icon vacancies between two adjacent icons to icon vacancies, not surrounded by at least two icons, in the last row or the first row. FIG. 7C is a schematic diagram illustrating that icon vacancies are eliminated by using the strategy with minimum icon movement on the current page.

Assuming that the rearrangement strategy is a random sorting strategy, all icons on the desktop or icons on a page with icon vacancies are randomly rearranged, such strategy has minimum calculation amount and easy to implement; while by adopting the strategy with minimum icon movement and the strategy with minimum icon movement on the current page, the distribution of the original icons on the desktop can be maintained as much as possible, so that users can find desired icons in familiar locations.

In some embodiments, the step that in response to detecting that an icon vacancy exists, a second icon processing operation used for eliminating the icon vacancy is executed after the first icon processing operation is executed includes:
in response to detecting an icon vacancy exists, detecting whether there is an input operation used for triggering the elimination of icon vacancy;
in response to detecting the input operation, the second icon processing operation used for eliminating the icon vacancy is performed after the first icon processing operation is executed.

In some cases, the user wants to automatically fill the icon vacancy to eliminate the icon vacancy. However, in some cases, the user does not want to automatically fill the icon vacancy. In order to improve the user's experience, in the embodiment of the present disclosure, an interface is provided for the input operation used for triggering the elimination of the icon vacancy. For example, the interface may be a graphic interface such as a virtual control or a physical control interface and the like. The input operation may be a click operation, a swiping operation, or a long-press operation and the like.

The mobile device will not execute the second icon processing operation until the input operation is detected, thereby reducing user's dislike caused by unnecessary elimination of the icon vacancy, and ensuring user satisfaction.

In some embodiments, the method may further include:
detecting setting information for icon vacancy elimination;
if the setting information indicates that the icon vacancies are automatically eliminated, the first icon processing operation is automatically executed even if no input operation is detected while icon vacancies are generated. Through user's one-time setting, the mobile device can be triggered to automatically execute the second icon processing operation later without performing corresponding input operation every time, which further improves the intelligence of the device and user satisfaction.

The embodiment of the present disclosure provides a method applied to a mobile device.

If the mobile device is a folding device, it is a device including at least one foldable screen. In this case, when the folding device is deployed, it is a PC and uses a handheld PC, and when the folding device is folded, it switched to a normal Miui desktop. The folding device can automatically restore to the handheld PC operating system after being deployed.

Three-finger swipe switching system: swipe left on the Miui (miui desktop, gallery and other full-screen tasks) system to switch to the handheld PC operating system. In the handheld PC operating system, swipe right with three fingers to switch to the Miui operating system. The Miui operating system here is a kind of mobile phone operating system.

Automatic filling of icon vacancies: There are many shortcut icons on the desktop of the handheld PC. After the shortcut icon is dragged, there is a vacancy in the middle, which looks very unsightly. At this time, the icon vacancy in the middle can be automatically filled through one-key automatic filling function.

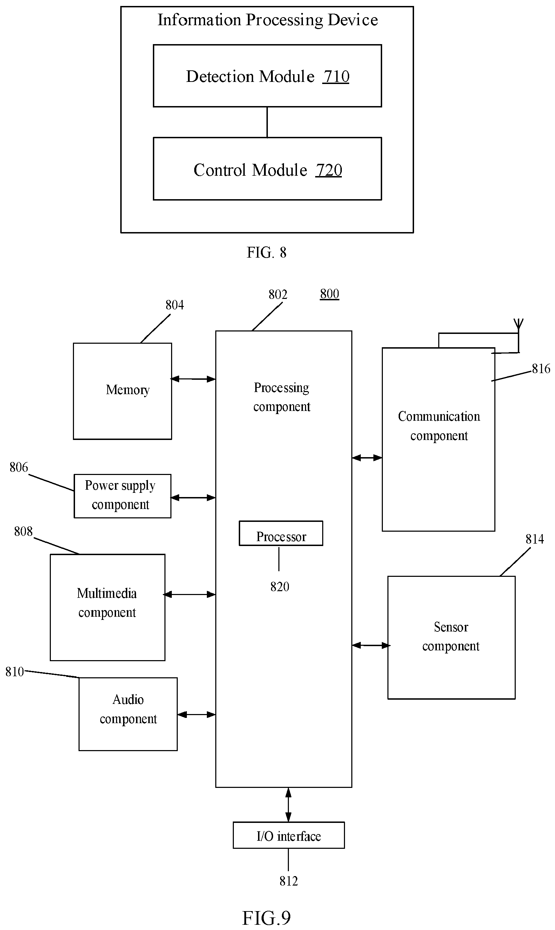

As shown in FIG. 8, embodiments of the present disclosure provide an information processing device, which is applied to a mobile device including a first screen that can be folded. The information processing device includes a detection module 710 and a control module 720.

The detection module 710 is configured to detect a current posture of the foldable first screen.

The control module 720 is configured to control the mobile device to run a first operating system or a second operating system according to the current posture of the foldable first screen. Among them, the first operating system is an operating system supporting multi-tasking and/or multi-window, and the second operating system is different from the first operating system.

In some embodiments, the detection module 710 and the control module 720 are both program modules that, when executed by a processor, can realize the current posture detection of the mobile device and control the operation of the operating system.

In other embodiments, the detection module 710 and the control module 720 may both be software-hardware combined modules. The software-hardware combined modules may include various programmable arrays, and the programmable arrays include but are not limited to complex programmable array and/or field programmable array.

In some other embodiments, the detection module 710 and the control module 720 may be pure hardware modules. The pure hardware modules include, but are not limited to application-specific integrated circuits.

In some embodiments, the control module 720 is specifically configured to: control the mobile device to run the first operating system in response to the foldable first screen being in the deployed posture; and/or control the mobile device to run the second operating system in response to the foldable first screen being in the folded posture.

In some embodiments, the control module 720 is further configured to: in response to the foldable first screen being in the deployed posture, control the mobile device to switch between the operating system and the second operating system according to an operation instruction acted on the foldable first screen.

In some embodiments, the control module 720 is further specifically configured to: control the mobile device to run the second operating system when it is determined according to the operation instruction information that a swiping operation in a first direction is detected; and/or, control the mobile device to run the first operating system when it is determined according to the operation instruction information that a swiping operation in a second direction is detected, and the second direction and the first direction are opposite directions.

In some embodiments, the device further includes a first display module. The first display module is configured to: display a system interface of the first operating system on the entire first screen in response to the mobile device running the first operating system and the foldable first screen being in the deployed posture; or, display a system interface of the second operating system on a part of screen area of the foldable first screen in response to the mobile device running the second operating system and the foldable first screen being in the folded posture, where the part of screen area of the foldable first screen is located on the outer surface of the mobile device after the foldable first screen is folded.

In some embodiments, the mobile device further includes a second screen. The second screen is located on the opposite side of the foldable first screen, and the projection of the second screen on the foldable first screen is located within the left half screen area or the right half screen area of the firs screen.

The device further includes: a second display module, configured to:
display a system interface of the first operating system on the entire first screen in response to the mobile device running the first operating system and the foldable first screen being in the deployed posture; or,
display a system interface of the second operating system on the second screen in response to the mobile device running the second operating system and the foldable first screen being in the folded posture.

In some embodiments, the device further includes:
a determination module, configured to: in response to detecting a first icon processing operation acted on the desktop displayed by the mobile device, determine whether an icon vacancy exists between icons displayed on the desktop after the first icon processing operation is executed; and
a processing module, configured to: in response to detecting there exists an icon vacancy, execute a second icon processing operation used for eliminating the icon vacancy after the first icon processing operation is executed.

In some embodiments, the processing module is specifically configured to perform at least one of the following:
in response to detecting there exists icon vacancies, icons displayed on the desktop are rearranged after the first icon processing operation is executed, and all the icon vacancies between adjacent icons disappear after the icons on the desktop are rearranged;
in response to detecting that there exists an icon vacancy, a preset icon is replenished at the icon vacancy after the first icon processing operation is executed.

In some embodiments, the control module 720 is specifically configured to: detect whether there is an input operation for triggering icon vacancy elimination if the icon vacancy is detected; in response to detecting the input operation, execute a second icon processing operation used for eliminating the icon vacancy after the icon processing operation is executed.

An embodiment of the present disclosure provides a mobile device, including:
a memory for storing processor executable instructions; and
a processor connected to the memory;
where the processor is configured to execute the information processing method provided by any of the foregoing technical solutions.

The processor may include various types of storage medium, and the storage medium is a non-transitory computer storage medium that can continue to store information stored thereon after the communication device is powered off.

Here, the mobile device may be the device provided in any of the foregoing embodiments.

For example, the processor may be connected to the memory via a bus or the like for reading executable programs stored on the memory, so that the processor can execute at least one of the methods shown in FIG. 1, FIG. 3, and FIG. 6.

FIG. 9 is a block diagram illustrating a mobile device 800 according to an exemplary embodiment. For example, the mobile device 800 may be included in a mobile device such as a mobile phone, a mobile computer, or a server, etc. In short, the data processing mobile device 800 may be included in any type of communication device.

Referring to FIG.9, the mobile device 800 may include one or more of the following components: a processing component 802, a memory 804, a power supply component 806, a multimedia component 808, an audio component 810, an input/output (I/O) interface 812, a sensor component 814, and a communication component 816.

Generally, the processing component 802 is configured to control the overall operations of the mobile device 800, such as operations associated with displaying, telephone calling, data communications, camera operations, and recording operations. The processing component 802 may include one or more processors 820 to execute instructions to complete all or part of the steps in the foregoing method. In addition, the processing component 802 may include one or more modules to facilitate the interaction between the processing component 802 and other components. For example, the processing component 802 may include a multimedia module to facilitate the interaction between the multimedia component 808 and the processing component 802.

The memory 804 is configured to store various data to support operations of the device 800. Examples of the data include instructions of any application or method that can be run on the device 800, contact data, phonebook data, messages, pictures and videos and the like. The memory 804 can be implemented by any type of volatile or non-volatile storage device or their combination, such as static random access memory (SRAM), electrically erasable programmable read-only memory (EEPROM), erasable and Programmable read-only memory (EPROM), programmable read-only memory (PROM), read-only memory (ROM), magnetic memory, flash memory, magnetic disk or optical disk.

The power supply component 806 is configured to supply power to various components of the device 800. The power supply component 806 may include a power management system, one or more power supplies, and other components associated with generating, managing, and distributing power for the device 800.

The multimedia component 808 includes a screen that provides an output interface between the device 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, swiping, and gestures on the touch panel. The touch sensor may not only sense the boundary of the touch or swipe action, but also detect the duration and pressure related to the touch or swipe operation. In some embodiments, the multimedia component 808 includes a front camera and/or a rear camera. When the device 800 is in an operation mode, such as a shooting mode or a video mode, the front camera and/or the rear camera can receive external multimedia data. Each front camera and rear camera can be a fixed optical lens system or have focal length and optical zoom capabilities.

The audio component 810 is configured to output and/or input audio signals. For example, the audio component 810 includes a microphone (MIC), and when the mobile device 800 is in an operation mode, such as a call mode, a recording mode, and a voice recognition mode, the microphone is configured to receive external audio signals. The received audio signal may be further stored in the memory 804 or transmitted via the communication component 816. In some embodiments, the audio component 810 further includes a speaker for outputting audio signals.

The I/O interface 812 provides an interface between the processing component 802 and a peripheral interface module. The peripheral interface module may be a keyboard, a click wheel, a button, and the like. The button includes but not limits to a home button, a volume button, a start button and a lock button.

The sensor component 814 includes one or more sensors for providing the device 800 with state evaluation in various aspects. For example, the sensor component 814 can detect the on/off state of the device 800 and relative positioning of components, such as the display and keypad of the mobile device 800. The sensor component 814 can also detect the position change of the mobile device 800 or a component of the mobile device 800, the presence or absence of contact between the user and the mobile device 800, the orientation or acceleration/deceleration of the mobile device 800, and the temperature change of the mobile device 800. The sensor component 814 may include a proximity sensor configured to detect the presence of nearby objects without physical contact. The sensor component 814 may also include a light sensor used for imaging application, such as a complementary metal oxide semiconductor (CMOS) or a charge coupled device (CCD) image sensor. In some embodiments, the sensor component 814 may also include an acceleration sensor, a gyroscope sensor, a magnetic sensor, a pressure sensor or a temperature sensor.

The communication component 816 is configured to facilitate wired or wireless communication between the mobile device 800 and other devices. The mobile device 800 can access a wireless network based on a communication standard, such as Wi-Fi, 2G, or 3G, or a combination thereof. In an exemplary embodiment, the communication component 816 receives a broadcast signal or broadcast related information from an external broadcast management system via a broadcast channel. In an exemplary embodiment, the communication component 816 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the device 800 may be implemented by one or more application specific integrated circuits (ASIC), digital signal processors (DSP), digital signal processing devices (DSPD), programmable logic devices (PLD), field programmable gate array (FPGA), a controller, a microcontroller, a microprocessor, or other electronic components, to execute the foregoing method.

In an exemplary embodiment, there is further provided a non-transitory computer-readable storage medium including instructions, such as a memory 804 including instructions, which may be executed by the processor 820 of the device 800 to complete the foregoing method. For example, the non-transitory computer-readable storage medium may be a ROM, a random access memory (RAM), a CD-ROM, a magnetic tape, a floppy disk, an optical data storage device, etc.

An embodiment of the present disclosure provides a non-transitory computer-readable storage medium. The instructions in the storage medium, when executed by the processor of the mobile device, cause the mobile device or the base station to execute the information processing method provided by any of the foregoing embodiments, and can execute at least one of the methods arbitrarily shown in FIG. 1 and/or FIG. 3 and/or FIG. 6.

The information processing method is applied to a mobile device including a foldable first screen. The method includes: detecting a current posture of the foldable first screen; controlling the mobile device to run a first operating system or a second operating system according to the current posture of the foldable first screen, among them, the first operating system is an operating system supporting multi-tasking and/or multi-window, and the second operating system is different from the first operating system.

It can be understood that, the controlling the mobile device to run a first operating system or a second operating system according to the current posture of the foldable first screen includes: in response to the foldable first screen being in a deployed posture, controlling the mobile device to run the first operating system; and/or, in response to the foldable first screen being in a folded posture, controlling the mobile device to run the second operating system.

It can be understood that, the method further includes: in response to the foldable first screen being in the deployed posture, controlling the mobile device to switch between the first operating system and the second operating system according to an operation instruction acted on the foldable first screen.

It can be understood that, the step that in response to the foldable first screen being in the deployed posture, controlling the mobile device to switch between the first operating system and the second operating system according to an operation instruction acted on the foldable first screen, includes: in response to the operation instruction, determining a swiping operation a swiping direction thereof is a first direction, and controlling the mobile device to run the second operating system; and/or, in response to the operation instruction, determining a swiping operation a swiping direction thereof is a second direction, controlling the mobile device to run the first operating system, and the second direction and the first direction are opposite directions.

It can be understood that, the method further includes: in response to the mobile device running the first operating system and the foldable first screen being in the deployed posture, displaying a system interface of the first operating system on the entire first screen; or,

in response to the mobile device running the second operating system and the foldable first screen being in the folded posture, displaying a system interface of the second operating system on a part of screen area of the foldable first screen, the part of screen area of the foldable first screen is located on the outer surface of the mobile device after the foldable first screen is folded.

It can be understood that, the mobile device further includes a second screen, where the second screen is located on the opposite side of the foldable first screen, and the projection of the second screen on the foldable first screen is located on the left half area of the foldable first screen or in the right half area of the foldable first screen. The method further includes: in response to the mobile device running the first operating system and the foldable first screen being in the deployed posture, displaying a system interface of the first operating system on the entire first screen; or, in response to the mobile device running the second operating system and the foldable first screen being in the folded posture, displaying a system interface of the second operating system on the second screen.

It can be understood that, the method further includes: in response to detecting a first icon processing operation acted on the desktop displayed by the mobile device, determining whether an icon vacancy exists between icons displayed on the desktop after the first icon processing operation is executed; in response to detecting that an icon vacancy exists, executing a second icon processing operation for eliminating the icon vacancy after the first icon processing operation is executed.

It can be understood that, the step that in response to detecting that an icon vacancy exists, executing a second icon processing operation for eliminating the icon vacancy after the first icon processing operation is executed includes at least one of the following:
in response to detecting that the icon vacancy exists, the icons displayed on the desktop are rearranged after the first icon processing operation is executed, where after the icons on the desktop are rearranged, the icon vacancy between adjacent icons disappears;
in response to detecting that the icon vacancy exists, a preset icon is replenished at the icon vacancy after the first icon processing operation is executed.

It can be understood that, the step that in response to detecting that an icon vacancy exists, executing a second icon processing operation for eliminating the icon vacancy after the first icon processing operation is executed includes: in response to detecting that an icon vacancy exists, detecting whether there is an input operation used for triggering icon vacancy elimination; and in response to detecting the input operation, executing the second icon processing operation for eliminating the icon vacancy after the first icon processing operation is executed.

Other embodiments of the present disclosure will be apparent to those skilled in the art from consideration of the specification and practice of the present disclosure disclosed herein. The present application is intended to cover any variations, uses, or adaptations of the present disclosure, which are consistent with the general principles of the present disclosure and include common general knowledge or conventional technical means in the art that are not disclosed in the present disclosure. The specification and embodiments are illustrative, and the real scope and spirit of the present disclosure is defined by the appended claims.

It should be understood that the present disclosure is not limited to the precise structures that have been described above and shown in the drawings, and various modifications and changes can be made without departing from the scope thereof. The scope of the present disclosure is merely defined by the appended claims.

## Claims

1. An information processing method, the method comprises:
detecting (S110), by a mobile device comprising a foldable first screen, a current posture of the foldable first screen; and
controlling (S120), by the mobile device according to the current posture of the foldable first screen, the mobile device to run a first operating system or a second operating system, wherein the second operating system is different from the first operating system.

2. The method according to claim 1, wherein the controlling (S120), according to the current posture of the foldable first screen, the mobile device to run a first operating system or a second operating system comprises at least one of:
in response to the foldable first screen being in a deployed posture, controlling the mobile device to run the first operating system; and
in response to the foldable first screen being in the folded posture, controlling the mobile device to run the second operating system.

3. The method according to claim 2, further comprising:
in response to the foldable first screen being in the deployed posture, controlling (S130), according to an operation instruction acted on the foldable first screen, the mobile device to switch between the first operating system and the second operating system.

4. The method according to claim 3, wherein the step, that in response to the foldable first screen being in the deployed posture, controlling (S130), according to an operation instruction acted on the foldable first screen, the mobile device to switch between the first operating system and the second operating system, comprises at least one of:
controlling the mobile device to run the second operating system when it is determined according to the operation instruction that a swiping operation in a first direction is detected; and
controlling the mobile device to run the first operating system when it is determined according to the operation instruction that a swiping operation in a second direction is detected;
wherein the second direction and the first direction are opposite directions.

5. The method according to claim 1, further comprising one of:
displaying a system interface of the first operating system on the entire foldable first screen in response to the mobile device running the first operating system and the foldable first screen being in the deployed posture; and,
displaying a system interface of the second operating system on a part of screen area of the foldable first screen in response to the mobile device running the second operating system and the foldable first screen being in the folded posture, wherein the part of screen area of the foldable first screen is located on an outer surface of the mobile device after the foldable first screen is folded.

6. The method according to claim 1, wherein the mobile device further comprises a second screen that is located on an opposite side of the foldable first screen, and a projection of the second screen on the foldable first screen is located within a left half screen area or a right half screen area of the firs screen;
wherein the method further comprises one of:
in response to the mobile device running the first operating system and the foldable first screen being in the deployed posture, displaying a system interface of the first operating system on the entire first screen; and
in response to the mobile device running the second operating system and the foldable first screen being in the folded posture, displaying a system interface of the second operating system on the second screen.

7. The method according to any one of claims 1 to 6, further comprising:
in response to detecting a first icon processing operation acted on a desktop displayed by the mobile device, determining whether an icon vacancy exists between icons displayed on the desktop after the first icon processing operation is executed (S210);
in response to detecting that the icon vacancy exists, executing a second icon processing operation for eliminating the icon vacancy after the first icon processing operation is executed (S220).

8. The method according to claim 7, wherein the step, that in response to detecting that the icon vacancy exists, executing a second icon processing operation for eliminating the icon vacancy after the first icon processing operation is executed, comprises at least one of:
in response to detecting that the icon vacancy exists, rearranging icons displayed on the desktop after the first icon processing operation is executed, and the icon vacancy between adjacent icons disappears after the icons on the desktop are rearranged;
in response to detecting that the icon vacancy exists, replenishing a preset icon at the icon vacancy after the first icon processing operation is executed.

9. The method according to claim 8, wherein the step, that in response to detecting that the icon vacancy exists, executing a second icon processing operation for eliminating the icon vacancy after the first icon processing operation is executed, comprises:
in response to detecting that the icon vacancy exists, detecting whether there is an input operation that triggers elimination of the icon vacancy; and
in response to detecting the input operation, executing the second icon processing operation for eliminating the icon vacancy after the first icon processing operation is executed.

10. An information processing device, wherein the information processing device comprises:
a processor (820); and
a memory (804) for storing a computer program,
wherein the processor is configured to call and run the computer program stored in the memory to perform the method of any one claims 1 to 9.

11. A mobile device, comprising a foldable first screen and the information processing device of claim 10.

12. A non-transitory computer-readable storage medium, wherein instructions in the storage medium, when executed by a processor of a computer, cause the computer to execute the information processing method provided in any one of claims 1 to 9.
